Europäisches Patentamt

(19) European Patent Office

Office européen des brevets

(11) Numéro de publication : **0 374 028 B1**

(12) **FASCICULE DE BREVET EUROPEEN**

(45) Date de publication du fascicule du brevet :
06.11.91 Bulletin 91/45

(51) Int. Cl.⁵ : **H04L 9/18, H04B 10/20**

(21) Numéro de dépôt : **89403423.0**

(22) Date de dépôt : **11.12.89**

(54) Procédé et système de communication à cryptage de l'information.

(30) Priorité : 14.12.88 FR 8816467

(43) Date de publication de la demande :
20.06.90 Bulletin 90/25

(45) Mention de la délivrance du brevet :
06.11.91 Bulletin 91/45

(84) Etats contractants désignés :
DE GB IT NL SE

(56) Documents cités :
DE-A- 2 153 300
GB-A- 1 422 291
US-A- 4 228 321
US-A- 4 805 216
ELECTRONICS LETTERS, vol. 23, no. 24, 19
novembre 1987, pages 1255-1257, Stevenage,
Herts, GB; J.R. STERN et al.: "Passive optical
local networks for telephony applications and
beyond"

(73) Titulaire : ETAT FRANCAIS représenté par le
Ministre des Postes, Télécommunications et
de l'Espace
(CENTRE NATIONAL D'ETUDES DES
TELECOMMUNICATIONS), 38-40 rue du
Général Leclerc
F-92131 Issy-les-Moulineaux (FR)

(72) Inventeur : Abiven, Jacques
Coat Mael Vieux Marché
F-22420 Plouaret (FR)

(74) Mandataire : Cabinet Martinet & Lapoux
BP 405
F-78055 Saint Quentin en Yvelines Cédex (FR)

Jouve, 18, rue Saint-Denis, 75001 PARIS

## Description

L'invention concerne de manière générale le problème du secret de l'information dans des systèmes de communication dans lesquels une pluralité d'installations terminales reçoivent des trames de signaux d'information multiplexés et sont susceptibles de lire dans lesdites trames des signaux d'information qui ne leur sont pas destinés. Plus particulièrement, l'invention concerne le cryptage de communications bidirectionnelles multiplexées à division de temps à travers des fibres optiques dans un réseau de télécommunications par exemple de type RNIS.

Dans un réseau de télécommunications à fibres optiques, la desserte locale des signaux de communication entre un central local et des installations d'abonné est réalisée au moyen d'un réseau de desserte étoilé comprenant plusieurs fibres optiques de transmission reliant le central et les installations d'abonné respectivement à différents accès d'un coupleur directif de fibres optiques constituant le noeud central du réseau de desserte étoilé. La communication entre le central et les installations d'abonné est du type à l'alternat collectif. Pendant des premières périodes de la communication, le central transmet un paquet descendant vers toutes les installations d'abonné. Le paquet descendant est constitué d'une pluralité de mots multiplexés destinés respectivement aux installations d'abonné. Pendant des secondes périodes de la communication, les installations d'abonné transmettent des mots destinés au central respectivement à différents instants déterminés. Au niveau du noeud central du réseau de desserte, les mots transmis par les installations d'abonné s'insèrent dans des intervalles temporels respectifs d'un paquet montant destiné au central.

Dans ce type de réseau de desserte se pose un problème de secret de l'information selon le sens de transmission descendant du central vers les installations d'abonné. En effet, chacune des installations d'abonné reçoit l'ensemble du paquet descendant et est susceptible de lire dans ledit paquet des mots qui sont destinés à d'autres installations. Selon le sens de transmission montant des installations d'abonné vers le central, le problème de secret ne se pose pas du fait que le coupleur de fibres optiques au centre du réseau est de type directif et qu'un mot transmis par une installation d'abonné vers le central n'est reçu que par celui-ci et ne peut être reçu par les autres installations.

La présente invention vise principalement à fournir un procédé pour résoudre le problème de secret de l'information exposé ci-dessus dans le contexte particulier d'un réseau local de desserte à fibres optiques et à l'alternat collectif mais qui convient également de manière générale pour tous réseaux de communication convoyant des communications multiplexées bidirectionnelles du type point à multipoint.

A cette fin, le procédé selon l'invention pour crypter de l'information dans un système de communication est tel que défini dans la revendication 1.

Un autre objectif de l'invention est de fournir des systèmes de communication à cryptage de l'information.

A cette fin, un système de communication à cryptage de l'information selon l'invention est tel que défini dans la revendication 2.

L'invention sera mieux comprise à la lecture de la description suivante du procédé et de plusieurs réalisations préférées de systèmes de communication selon l'invention en référence aux dessins annexés correspondants dans lesquels :

— la Fig. 1 montre schématiquement l'architecture d'un système de communication selon l'invention constitué par un réseau de communication étoilé à l'alternat collectif et à fibres optiques ;

— les Figs. 2A et 2B montrent des diagrammes respectivement de paquets montants et descendants échangés entre un central et des installations d'abonné compris dans le système de communication représenté à la Fig. 2 ; et

— la Fig. 3 montre des circuits de cryptage et de décryptage inclus respectivement dans le central et les installations d'abonné du système de communication.

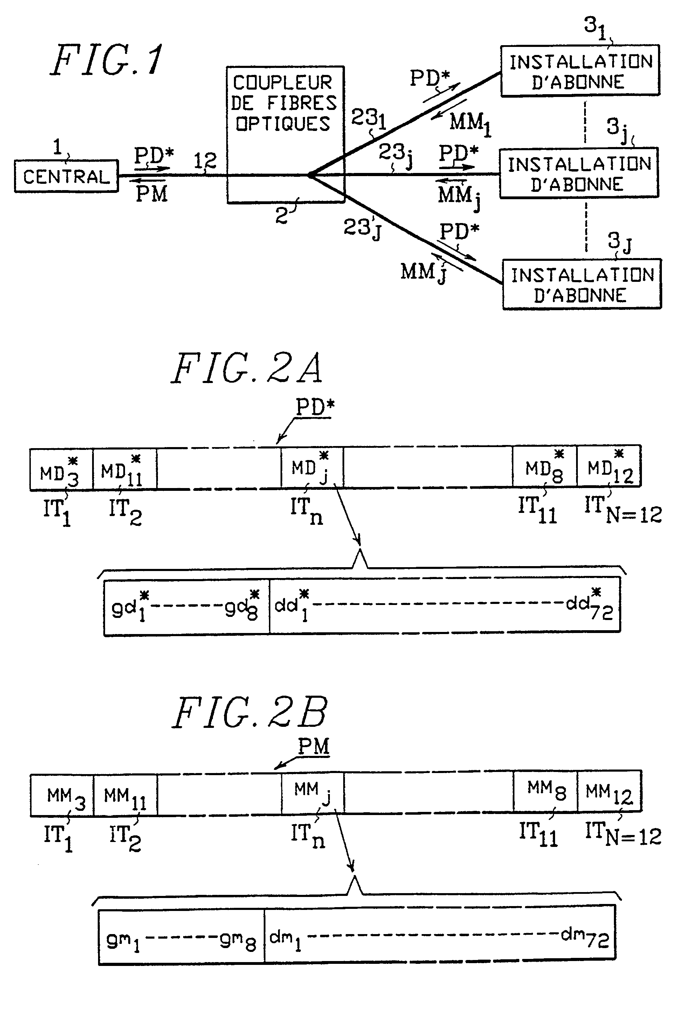

En référence à la Fig. 1, un système de communication selon l'invention à cryptage de l'information est par exemple constitué d'un réseau de communication à l'alternat collectif à fibres optiques du type à structure en étoile. Le réseau de communication comprend une station centrale, telle qu'un central de commutation 1 connecté à plusieurs stations terminales, telles que J = 12 installations d'abonné $3_1$ à $3_J$, à travers un coupleur de fibres optiques 2. Le coupleur a un premier accès relié au central 1 à travers une fibre optique 12 et J = 12 seconds accès reliés respectivement aux J = 12 installations d'abonné $3_1$ à $3_J$ à travers J = 12 fibres optiques $23_1$ à $23_J$.

Des paquets sont transmis à l'alternat collectif entre le central 1 et les installations d'abonné $3_1$ à $3_J$. Pendant des premières périodes de communication, le central 1 transmet des paquets descendants cryptés PD* qui sont reçus par toutes les installations d'abonné $3_1$ à $3_J$. Pendant des secondes périodes de communication, les installations d'abonné $3_1$ à $3_J$ transmettent respectivement des mots de données montants $MM_j$ destinés au central 1, où j est un indice compris entre 1 et J.

Selon l'invention, les mots de données $MM_j$ sont transmis en clair et ne sont pas cryptés du fait que le coupleur 2 est de type directif et qu'un mot $MM_j$ transmis par l'installation $3_j$ n'est reçu que par le central 1.

Au niveau du coupleur 2 constituant le centre du réseau étoilé, les différents mots $MM_j$ transmis par les installations d'abonné coïncident respectivement avec différents intervalles temporels et forment un paquet montant PM qui est convoyé jusqu'au central 1 à travers la fibre optique 12. Les premières et secondes périodes de la communication sont alternées et pendant chaque période est transmis un unique paquet.

Les structures des paquets descendants et montants PD* et PM sont montrées respectivement aux Figs. 2A et 2B.

Comme montré à la Fig. 2A, un paquet descendant PD* comprend $N = J = 12$ intervalles temporels de mot $IT_1$ à $IT_{N = 12}$ de même durée. Les intervalles temporels $IT_1$ à $IT_N$ contiennent des mots de données cryptés $MD^*_j$ destinés spécifiquement aux installations d'abonné $3_1$ à $3_J$. Les intervalles temporels $IT_1$ à $IT_N$ sont par exemple attribués par le central 1 aux installations d'abonné $3_1$ à $3_J$ en fonction de l'ordre de connexion des installations. A une installation d'abonné $3_j$ connectée est attribué un intervalle temporel $IT_n$ dont l'indice n compris entre 1 et $N = J = 12$ représente un rang de connexion de l'installation $3_j$.

Comme montré également à la Fig. 2A, un mot de données $MD^*_j$ est constitué d'un octet de gestion et de neuf octets de données, soit de 8 bits de gestion $gd^*_1$ à $gd^*_8$ et 72 bits de données $dd^*_1$ à $dd^*_{72}$. Les bits de gestion $gd^*_1$ à $gd^*_8$ ne sont pas cryptés en fonction d'informations variables connues du central 1 et de l'installation d'abonné $3_j$ destinataire. Les bits de gestion sont de préférence codés selon un code à redondance afin d'autoriser une détection et une correction d'erreurs de transmission dans les installations d'abonné. De plus, selon l'invention, une information utilisée pour le décryptage des mots $MD^*_j$ reçus par les installations d'abonné est également convoyée par les bits de gestion $gd^*_1$ à $gd^*_8$.

De même qu'un paquet descendant PD*, un paquet montant PM comme montré à la Fig. 2B, est composé de $N = J = 12$ intervalles temporels de mot $IT_1$ à $IT_{N = 12}$ de même durée. Les intervalles temporels $IT_1$ à $IT_N$ d'un paquet PM contiennent les mots de données $MM_j$ destinés au central 1. Les mots de données $MD_j$ et $MM_j$ occupent respectivement des intervalles temporels $IT_n$ ayant le même rang n dans les paquets PD* et PM.

De même qu'un mot de données descendant $MD^*_j$, un mot de données montant $MM_j$ est constitué d'un octet de gestion et de neuf octets de données, soit de 8 bits de gestion $gm_1$ à $gm_8$ et 72 bits de données $dm_1$ à $dm_{72}$. Les bits de gestion $gm_1$ à $gm_8$ sont de même que les bits $gd^*_1$ à $gd^*_8$ codés selon un code à redondance afin d'autoriser une détection et une correction d'erreurs de transmission dans le central 1.

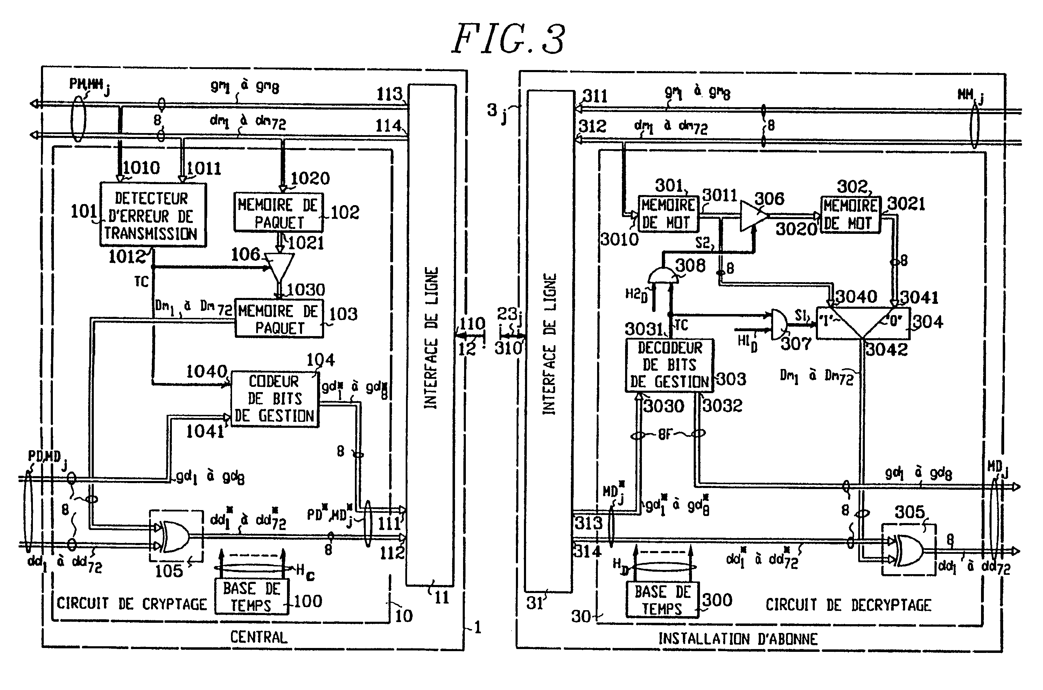

En référence à la Fig. 3 sont maintenant décrits un circuit de cryptage 10 et un circuit de décryptage 30 inclus respectivement dans le central 1 et dans une installation d'abonné $3_j$.

Comme montré à gauche de la Fig. 3, le central 1 est équipé d'une interface de ligne 11 reliée à la fibre optique 12 et au circuit de cryptage 10. Un accès optique 110 de l'interface 11 est relié à la fibre optique 12. Des premier et second ports d'entrée électriques 111 et 112 de l'interface 11 reçoivent octet par octet respectivement les bits de gestion $gd^*_1$ à $gd^*_8$ et les bits de données $dd^*_1$ à $dd^*_{72}$ d'un paquet descendant PD* à transmettre vers les installations d'abonné pendant une première période de communication. Des premier et second ports de sortie électriques 113 et 114 de l'interface 11 délivrent octet par octet respectivement les bits de gestion $gm_1$ à $gm_8$ et les bits de données $dm_1$ à $dm_{72}$ contenus dans un paquet montant PM reçu pendant une seconde période de la communication.

Le circuit de cryptage 10 comprend essentiellement une base de temps 100, un détecteur d'erreur de transmission 101, des première et seconde mémoires de paquet 102 et 103, un codeur de bits de gestion 104, et un circuit à portes OU-exclusif 105.

La base de temps 100 produit plusieurs signaux d'horloge et de séquencement $H_C$ qui sont fournis aux éléments 101 à 104 du circuit de cryptage 10 afin de commander et synchroniser leur fonctionnement.

Le détecteur d'erreur de transmission 101 est un circuit classique du type à contrôle cyclique de redondance (CRC4). Le détecteur 101 comprend des premier et second ports d'entrée 1010 et 1011 qui sont reliés respectivement aux premier et second ports de sortie 113 et 114 de l'interface 11 afin de recevoir les bits de gestion et de données dans un paquet montant PM. Le détecteur 101 réalise un calcul de redondance à partir des bits de données $dd_1$ à $dd_{72}$ reçus et compare le résultat de ce calcul à une information correspondante qui est convoyée par les bits de gestion $gm_1$ à $gm_8$ et qui indique le résultat auquel doit aboutir le calcul de redondance dans le cas d'un paquet PM reçu sans erreur de transmission. Par une sortie 1012, le détecteur 101 délivre un signal logique TC indiquant qui est à l'état "1" pour indiquer une réception sans erreur du paquet PM. Le signal TC est appliqué à une entrée de commande d'un amplificateur-buffer 106 de type à trois états.

Les première et seconde mémoires de paquet 102 et 103 sont analogues. Chacune des mémoires 102 et 103 comprend $9 \times J = 108$ cellules de mémoire d'un octet chacune qui sont destinées à mémoriser respectivement les $9 \times J = 108$ octets de données de paquets montants PM.

La première mémoire 102 a pour fonction de mémoriser les octets de données du paquet PM en cours de réception. Elle comprend un port d'entrée 1020 relié au second port de sortie 114 de l'interface 11 afin de recevoir octet par octet les bits de données $dm_1$ à $dm_{72}$ au fur et à mesure de leur transmission par l'interface 11 et de les charger dans les cellules de mémoire. Un port de sortie 1021 de la première mémoire 102 est relié à un port d'entrée 1030 de la seconde mémoire 103 à travers l'amplificateur-buffer 106.

A la fin de la transmission en cours du paquet PM par l'interface 11, dans le cas où aucune erreur de transmission n'a été détectée par le détecteur 101, le détecteur 101 transmet le signal TC = "1" qui active l'amplificateur-buffer 106, et le contenu de la première mémoire 102 est transféré à cadence rapide vers la seconde mémoire 103. La seconde mémoire 103 contient donc à tout instant les bits de données $dm_1$ à $dm_{72}$ du dernier paquet montant PM reçu sans erreur de transmission. Les bits de données mémorisés dans la mémoire 103 sont notés $Dm_1$ à $Dm_{72}$.

Le codeur de bits de gestion 104 produit les bits de gestion $gd^*_1$ à $gd^*_8$ du paquet descendant PD* en fonction du signal TC et de bits de gestion $gd_1$ à $gd_8$ inclus dans un paquet descendant correspondant PD fourni en clair par le central 1 pour cryptage en le paquet PD* et transmission vers les installations d'abonné. Le codeur 104 reçoit à une entrée 1040 et à un port d'entrée 1041 respectivement le signal TC et les bits de gestion $gd_1$ à $gd_8$. Les bits de gestion $gd^*_1$ à $gd^*_8$ sont appliqués par le codeur 104 au premier port d'entrée 111 de l'interface 11. Sous forme codée, les bits de gestion $gd^*_1$ à $gd^*_8$ convoient l'information fournie par le signal TC.

Le circuit à portes OU-exclusif 105 est représenté schématiquement à la Fig. 3 par une unique porte OU-exclusif pour des raisons de commodité. Le circuit 105 est en fait constitué de 8 portes OU-exclusif à 2 entrées, en parallèle, pour crypter, octet par octet, les octets de bits de données $dd_1$ à $dd_{72}$ en fonction des octets correspondants de bits de données $Dm_1$ à $Dm_{72}$. Les bits de données $dd_1$ à $dd_{72}$ sont appliqués à des premières entrées du circuit 105 ; les bits de données $Dm_1$ à $Dm_{72}$ sont appliqués à des secondes entrées du circuit 105. Le circuit 105 délivre les bits de données cryptées $dd^*_1 = dd_1 \oplus Dm_1$ à $dd^*_{72} = dd_{72} \oplus Dm_{72}$, le symbole $\oplus$ représentant l'opération logique OU-exclusif.

Comme montré à droite de la Fig. 3, l'installation d'abonné $3_j$ est équipée d'un interface de ligne 31. Un accès optique 310 de l'interface 31 est relié à la fibre optique $23_j$. Des premier et second ports d'entrée électriques 311 et 312 de l'interface 31 reçoivent respectivement octet par octet les bits de gestion $gm_1$ à $gm_8$ et de données $dm_1$ à $dm_{72}$ d'un mot de paquet montant $MM_j$ à transmettre vers le central 1 pendant une seconde période de communication. Des premier et second ports de sortie électriques 313 et 314 de l'interface 31 délivrent respectivement octet par octet les bits de gestion $gd^*_1$ à $gd^*_8$ et de données $dd^*_1$ à $dd^*_{72}$ d'un paquet descendant crypté PD* reçu pendant une première période de communication.

Le circuit de décryptage 30 comprend essentiellement une base de temps 300, des première et seconde mémoires de mot 301 et 302, un décodeur de bits de gestion 303, un multiplexeur 304, et un circuit à portes OU-exclusif 305.

La base de temps 300 produit plusieurs signaux d'horloge et de séquencement $H_D$ qui sont fournis aux éléments 301 à 304 du circuit de décryptage 30 afin de commander et de synchroniser leur fonctionnement.

Les première et seconde mémoires de mot 301 et 302 sont analogues. Chacune des mémoires 301 et 302 comprend 9 cellules de mémoire d'un octet chacune qui sont destinées à mémoriser octet par octet les bits de données $dm_1$ à $dm_{72}$ de mots montants $MM_j$.

La première mémoire 301 a pour fonction de mémoriser les bits de données $dm_1$ à $dm_{72}$ du dernier mot montant $MM_j$ transmis par l'installation $3_j$. La mémoire 301 comprend un port d'entrée 3010 relié au second port d'entrée 312 de l'interface 31 pour recevoir et charger dans la mémoire les octets de bits de données $dm_1$ à $dm_{72}$ au fur et à mesure que les octets sont fournis au port 312 de l'interface 31. A la fin de la transmission d'un mot montant $MM_j$, tous les bits de données $dm_1$ à $dm_{72}$ du mot sont mémorisés dans la mémoire 301. La mémoire 301 comprend un port de sortie 3011 relié à un premier port d'entrée 3040 du multiplexeur 304.

La seconde mémoire 302 a pour fonction de mémoriser les bits de données $dm_1$ à $dm_{72}$ du dernier mot $MM_j$ transmis par l'installation d'abonné $3_j$ et reçu sans erreur de transmission par le central 1. La mémoire 302 comprend un port d'entrée 3020 relié au port de sortie 3011 de la mémoire 301 à travers un amplificateur-buffer 306 de type à trois états. Un port de sortie 3021 de la mémoire 302 est relié à un second port d'entrée 3041 du multiplexeur 304.

Le décodeur de bits de gestion 303 réalise une opération de décodage inverse de l'opération de codage réalisée par le codeur 104 et a pour fonction de restituer les bits de gestion $gd_1$ à $gd_8$ et le signal TC à partir des bits de gestion codés $gd^*_1$ à $gd^*_8$ du mot descendant $MD^*_j$ reçu. Un port d'entrée 3030 du décodeur 303 est relié au premier port de sortie 313 de l'interface 31 pour recevoir les bits de gestion $gd^*_1$ à $gd^*_8$. Le décodeur 303 délivre le signal TC et les bits de gestion $gd_1$ à $gd_8$ respectivement par une sortie 3031 et un port de sortie 3032.

Le signal TC est appliqué à des premières entrées de deux portes ET à deux entrées 307 et 308. Des secondes entrées des portes 307 et 308 reçoivent respectivement des signaux d'horloge $H1_D$ et $H2_D$ fournis par la base de temps 300. Des sorties des portes 307 et 308 délivrent respectivement des signaux de commande S1 et S2. Les signaux S1 et S2 sont appliqués à des entrées de commande respectivement du multiplexeur 304 et de l'amplificateur-buffer 306.

Pendant la réception d'un mot descendant $MD^*_j$ dans le circuit de décryptage 30, les signaux d'horloge $H1_D$ et $H2_D$ sont respectivement à l'état "1" et à l'état "0". Les portes 307 et 308 sont alors respectivement ouverte et fermée. Dans le cas où le signal TC est à l'état "1", le premier port d'entrée 3040 du multiplexeur 304 est sélectionné par le signal S1, et le port de sortie 3042 du multiplexeur 304 délivre octet par octet par un port de sortie 3042 le contenu de la première mémoire 301. La mémoire 301 contient alors, puisque TC = "1", les bits de données $Dm_1$ à $Dm_{72}$ du mot $MM_j$ du dernier paquet PM transmis par l'installation $3_j$ et reçu sans erreur de transmission par le central 1. Dans le cas où le signal TC est à l'état "0", le second port d'entrée 3041 du multiplexeur 304 est sélectionné par le signal S1 et le port de sortie 3042 du multiplexeur 304 délivre octet par octet le contenu de la seconde mémoire 302. La mémoire 302 contient alors les bits de données $Dm_1$ à $Dm_{72}$ du mot $MM_j$ du dernier paquet PM transmis par l'installation $3_j$ et reçu sans erreur de transmission par le central 1, paquet qui est différent, puisque TC = "0", du dernier paquet transmis vers le central 1 et dont le mot correspondant $MM_j$ transmis par l'installation $3_j$ est mémorisé dans la première mémoire 301.

A la fin de la réception du mot $MD_j^*$ par le circuit de décryptage 30, les signaux d'horloge $H1_D$ et $H2_D$ viennent respectivement à l'état "0" et à l'état "1". Les portes 307 et 308 sont alors respectivement fermée et ouverte. Dans le cas où le signal TC est à l'état "1" et indique que le dernier paquet PM transmis vers le central 1 a été reçu sans erreur de transmission, le signal S2 fourni par la porte 308 est à l'état "1", l'amplificateur-buffer 306 est activé et le contenu de la première mémoire 301 est transféré à cadence rapide dans la seconde mémoire 302. Dans la mémoire 302 sont ainsi sauvegardés les bits $Dm_1$ à $Dm_{72}$ du mot $MM_j$ du dernier paquet PM reçu sans erreur de transmission par le central 1.

Le circuit à portes OU-exclusif 305 est analogue au circuit 105 inclus dans le circuit de cryptage 10. Un premier port d'entrée du circuit 305 reçoit les octets de bits de données $dd_1^*$ à $dd_{72}^*$ transmis par le second port de sortie 314 de l'interface 31 ; un second port d'entrée du circuit 305 reçoit les octets de bits de données $Dm_1$ à $Dm_{72}$ transmis par le multiplexeur 304. Le circuit 305 fournit les octets de bits de données $dd_1 = dd_1^* \oplus Dm_1$ à $dd_{72} = dd_{72}^* \oplus Dm_{72}$. Le mot descendant $MD_j$ constitué des bits de données $dd_1$ à $dd_{72}$ et de gestion $gd_1$ à $gd_8$ est reconstitué et est délivré par un port de sortie du circuit de décryptage 30.

## Revendications

1. Procédé pour crypter de l'information dans un système de communication dans lequel des communications multiplexées bidirectionnelles de type point à multipoint sont établies entre une station centrale (1) et une pluralité de stations terminales ($3_j$), la station centrale (1) transmettant respectivement des premiers mots multiplexés ($MD_j^*$) vers des stations terminales ($3_j$), et les stations terminales ($3_j$) délivrant respectivement des seconds mots ($MM_j$) qui sont multiplexés et transmis vers la station centrale (1), caractérisé en ce qu'il comprend

dans la station centrale (1), détection d'erreurs de transmission dans les seconds mots ($MM_j$) de manière à établir des informations d'erreur de transmision (TC) et à les transmettre vers les installations terminales ($3_j$), et cryptage des premiers mots ($MD_j^*$) respectivement en fonction de seconds mots ($MM_j$) correspondants précédemment reçus dans la station centrale (1) sans erreur de transmission, et

dans les stations terminales ($3_j$), détection desdites informations d'erreur de transmission (TC), mémorisation temporaire des seconds mots ($MM_j$) qui sont transmis par les stations terminales ($3_j$) et reçus sans erreur de transmission par la station centrale (1), et décryptage des premiers mots reçus ($MD_j^*$) respectivement dans les stations terminales correspondantes ($3_j$) en fonction des informations d'erreur de transmission détectées (TC) et des seconds mots mémorisés ($MM_j$).

2. Système de communication à cryptage de l'information pour la mise en oeuvre du procédé selon la revendication 1 comprenant une station centrale (1) reliée par des supports de transmission ($12, 23_j$) à une pluralité de stations terminales ($3_j$) et avec lesquelles sont établies des communications multiplexées bidirectionnelles du type point à multipoint, la station centrale (1) transmettant des premiers mots multiplexés ($MD_j^*$) destinés respectivement aux stations terminales ($3_j$) et les stations terminales ($3_j$) délivrant respectivement des seconds mots ($MM_j$) qui sont multiplexés et transmis vers la station centrale (1), caractérisé par un dispositif de cryptage (10) de la station centrale (1) comprenant

des moyens (101) pour détecter les erreurs de transmission dans les seconds mots ($MM_j$) reçus de manière à produire les informations relatives aux erreurs de transmission,

des moyens (102, 106, 103) pour mémoriser temporairement les seconds mots ($MM_j$) reçus sans erreur de transmission,

des moyens (104) pour inclure dans les premiers mots à transmettre ($MD_j^*$) les informations (TC) relatives aux erreurs de transmission, et

des moyens (105) pour crypter les premiers mots à transmettre ($MD_j^*$) en fonction des seconds mots mémorisés ($MM_j$)

et par chacun des dispositifs de décryptage (30) des stations terminales ($3_j$) comprenant

des moyens (303) pour détecter les informations (TC) relatives aux erreurs de transmission dans les premiers mots reçus ($MD_j^*$),

des moyens (301, 306, 302) pour mémoriser temporairement les seconds mots ($MM_j$) transmis par les stations terminales ($3_j$) et reçus sans erreur de transmission par la station centrale (1), et des moyens (305) pour décrypter les premiers mots reçus (MD*j) en fonction des seconds mots mémorisés (MMj).

3. Système de communication conforme à la revendication 2, caractérisé en ce que lesdits moyens pour crypter et pour décrypter comprennent des portes logiques du type OU-exclusif (105, 305).

4. Système de communication conforme à l'une quelconque des revendications 2 à 3, caractérisé en ce que les supports de transmission (12, 23j) sont du type optique et le système comprend un coupleur directif de fibres optiques (2).

5. Système de communication conforme à l'une quelconque des revendications 2 à 4, caractérisé en ce que les communications multiplexées bidirectionnelles entre la station centrale (1) et les stations terminales (3j) sont du type à l'alternat collectif.

## Patentansprüche

1. Verfahren zur Informationsverschlüsselung in einem Kommunikationssystem, in dem gemultiplexte bidirektionale, sternförmige Verbindungen zwischen einer Zentralstation (1) und mehreren Endstationen (3j) vorgesehen sind, wobei die Zentralstation (1) jeweils erste gemultiplexte Worte (MD*j) zu den Endstationen (3j) überträgt und die Endstationen (3j) jeweils zweite Worte (MMj) abgeben, die gemultiplext und zur Zentralstation (1) übertragen werden, gekennzeichnet durch folgende Schritte :

in der Zentralstation (1) Entdeckung der Übertragungsfehler in den zweiten Worten (MMj), so daß Informationen über die Übertragungsfehler (TC) gebildet und zu den Endstationen (3j) übertragen werden, und Verschlüsselung der ersten Worte (MD*j) jeweils als Funktion der entsprechenden zweiten Worte (MMj), die zuvor in der Zentralstation (1) ohne Übertragungsfehler empfangen wurden, und

in den Endstationen (3j) Entdeckung der Informationen über Übertragungsfehler (TC), temporäre Speicherung der zweiten Worte (MMj), die durch die Endstationen (3j) übertragen und ohne Übertragungsfehler durch die Zentralstation (1) empfangen wurden, und Entschlüsselung der ersten empfangenen Worte (MD*j) in den jeweils zugehörigen Endstationen (3j) als Funktion der Informationen über die entdeckten Übertragungsfehler (TC) und der zweiten abgespeicherten Worte (MMj).

2. Kommunikationssystem mit Informationsverschlüsselung zur Durchführung des Verfahrens nach Anspruch 1 mit einer Zentralstation (1), die über Übertragungseinrichtungen (12, 23j) mit einer Vielzahl von Endstationen (3j) verbunden ist, und durch die gemultiplexte, bidirektionale Verbindungen in sternförmiger Anordnung gebildet werden, wobei die Zentralstation (1) erste gemultiplexte Worte (MD*j) überträgt, die jeweils für die Endstationen (3j) bestimmt sind, und die Endstationen (3j) jeweils zweite Worte (MMj) abgeben, die gemultiplext und zur Zentralstation (1) übertragen werden, gekennzeichnet durch

eine Verschlüsselungseinrichtung (10) der Zentralstation (1), die Einrichtungen (101) zur Entdeckung von Übertragungsfehlern in den zweiten Worten (MMj) aufweist, die empfangen werden zur Erzeugung von Informationen über Übertragungsfehler,

Einrichtungen (102, 106, 103) zur temporären Abspeicherung der zweiten Worte (MMj), die fehlerfrei übertragen wurden,

Einrichtungen (104) zur Aufnahme der Informationen (TC) über Übertragungsfehler in die ersten zu übertragenden Worte (MD*j) und

Einrichtungen (105) zur Verschlüsselung der ersten zu übertragenden Worte (MD*j) als Funktion der zweiten abgespeicherten Worte (MMj), und dadurch, daß jede der Entschlüsselungseinrichtungen (30) der Endstationen (3j) Einrichtungen (303) zur Entdeckung der Informationen (TC) über Übertragungsfehler in den ersten empfangenen Worten (MD*j),

Einrichtungen (301, 306, 302) zur temporären Abspeicherung der zweiten Worte (MMj), die von den Endstationen übertragen und ohne Übertragungsfehler von der Zentralstation (1) empfangen wurden, und

Einrichtungen (305) zur Entschlüsselung der ersten empfangenen Worte (MD*j) als Funktion der zweiten abgespeicherten Worte (MMj) aufweist.

3. Kommunikationssystem nach Anspruch 2, dadurch gekennzeichnet, daß die Verschlüsselungs- und Entschlüsselungseinrichtungen logische Gatter des Exklusiv-ODER-Typs (105, 305) aufweisen.

4. Kommunikationssystem nach Anspruch 2 oder 3, dadurch gekennzeichnet, daß die Übertragungseinrichtungen (12, 23j) optische Fasern sind und das System einen Richtungskoppler (2) für die optischen Fasern aufweist.

5. Kommunikationssystem nach einem der Ansprüche 2 bis 4, dadurch gekennzeichnet, daß die gemultiplexten bidirektionalen Verbindungen zwischen der Zentralstation (1) und den Endstationen (3j) alternierende Sammelverbindungen sind (alternat-collectif).

## Claims

1. Method for encrypting information in a communication system in which bidirectional multiplexed communications of the point-to-multipoint type are derived between a central station (1) and a plurality of terminal stations (3ⱼ), the central station (1) transmitting first multiplexed words (MD*ⱼ) respectively towards some terminal stations (3ⱼ), and the terminal stations (3ⱼ) respectively supplying second words (MMⱼ) which are multiplexed and transmitted towards the central station (1), characterized in that it comprises

in the central station (1), detecting transmission errors in the second words (MMⱼ) thereby deriving transmission error informations (TC) and transmitting them towards the terminal installations (3ⱼ), and encrypting of the first words (MD*ⱼ) respectively as a function of corresponding second words (MMⱼ) previously received in the central station (1), free of transmission error, and

in the terminal stations, detecting said transmission error informations (TC), memorizing temporarily the second words (MMⱼ) that are transmitted from the terminal stations (3ⱼ) and received free of transmission error by the central station (1), and decrypting the first words respectively received (MD*ⱼ) in the corresponding terminal stations (3ⱼ) as a function of the detected transmission error informations (TC) and the memorized second words (MMⱼ).

2. Communication system with information encryption for carrying out the method according to claim 1, comprising a central station (1) connected by transmission media (12, 23ⱼ) to a plurality of terminal stations (3ⱼ) and with which are derived bidirectional multiplexed communications of the point-to-multipoint type, the central station (1) transmitting first multiplexed words (MD*ⱼ) respectively destined for the terminal stations (3ⱼ), and the terminal stations (3ⱼ) respectively delivering second words (MMⱼ) which are multiplexed and transmitted towards the central station (1), characterized by an encryption device (10) of the central station (1) comprising

means (101) for detecting the transmission errors in the second words (MMⱼ) received thereby deriving the informations relating to the transmission errors,

means (102, 106, 103) for memorizing temporarily the second words (MMⱼ) received free of transmission error,

means (104) for including the informations (TC) relating to the transmissions errors in the first words to be transmitted (MD*ⱼ), and

means (105) for encrypting the first words to be transmitted (MD*ⱼ) as a function of the memorized second words (MMⱼ),

and by each of decrypting devices (30) of the terminal stations (3ⱼ) comprising

means (303) for detecting the informations (TC) relating to the transmission errors in the first received words (MD*ⱼ),

means (301, 306, 302) for memorizing temporarily the second words (MMⱼ) transmitted by the terminal stations (3ⱼ) and received free of transmission error by the central station (1), and

means (305) for decrypting the first words received (MD*ⱼ) as a function of the memorized second words (MMⱼ).

3. Communication system according to claim 2, characterized in that said crypting and decrypting means comprise logic gates of the EXCLUSIVE-OR type (105, 305).

4. Communication system according to any one of claims 2 to 3, characterized in that the transmission media (12, 23ⱼ) are of the optical fiber type and the system comprises a directional optical fiber coupler (2).

5. Communication system according to any one of claim 2 to 4, characterized in that the bidirectional multiplexed communications between the central station (1) and the terminal stations (3ⱼ) are of the collective half-duplex type.

# FIG.1

COUPLEUR
DE FIBRES
OPTIQUES

$PD^*$   $23_1$   INSTALLATION D'ABONNE   $3_1$

$MM_1$

CENTRAL   $1$   $PD^*$   $12$   $23_j$   $PD^*$   INSTALLATION D'ABONNE   $3_j$

$PM$   $2$   $\overline{MM_j}$

$23_J$   $PD^*$

$MM_j^*$   INSTALLATION D'ABONNE   $3_J$

# FIG.2A

$PD^*$

| $MD_3^*$ | $MD_{11}^*$ | | $MD_j^*$ | | $MD_8^*$ | $MD_{12}^*$ |
|---|---|---|---|---|---|---|
| $IT_1$ | $IT_2$ | | $IT_n$ | | $IT_{11}$ | $IT_{N=12}$ |

| $gd_1^*$ - - - - - $gd_8^*$ | $dd_1^*$ - - - - - - - - - - - $dd_{72}^*$ |
|---|---|

# FIG.2B

$PM$

| $MM_3$ | $MM_{11}$ | | $MM_j$ | | $MM_8$ | $MM_{12}$ |
|---|---|---|---|---|---|---|
| $IT_1$ | $IT_2$ | | $IT_n$ | | $IT_{11}$ | $IT_{N=12}$ |

| $gm_1$ - - - - - $gm_8$ | $dm_1$ - - - - - - - - - - - $dm_{72}$ |
|---|---|

# FIG.3

EP 0 374 028 B1